(19) Europäisches Patentamt
European Patent Office
Office européen des brevets

(11) **EP 1 314 973 A1**

(12) **DEMANDE DE BREVET EUROPEEN**

(43) Date de publication:
**28.05.2003 Bulletin 2003/22**

(51) Int Cl.[7]: **G01N 21/43**

(21) Numéro de dépôt: **02292590.3**

(22) Date de dépôt: **18.10.2002**

(84) Etats contractants désignés:
**AT BE BG CH CY CZ DE DK EE ES FI FR GB GR
IE IT LI LU MC NL PT SE SK TR**
Etats d'extension désignés:
**AL LT LV MK RO SI**

(30) Priorité: **16.11.2001 FR 0114815**

(71) Demandeur: **Institut Francais du Petrole
92852 Rueil-Malmaison Cedex (FR)**

(72) Inventeur: **Frot, Didier
78100 St Germain-en-Laye (FR)**

(54) **Réfractomètre à fibre optique**

(57)     L'invention concerne un réfractomètre et une méthode de mesure de l'indice de réfraction d'un milieu. Un rayon lumineux incident (B) est dirigé sur un dioptre (7) composé d'un milieu d'indice de réfraction connu (4) et du milieu étudié (5), puis l'intensité du rayon lumineux réfléchi (D) est mesurée. Les rayons lumineux incident et réfléchi se propagent dans un tronçon de fibre optique (27). Le rapport entre l'intensité du rayon incident et l'intensité du rayon réfléchi permet de calculer, au moyen des formules de Fresnel, l'indice de réfraction du milieu étudié.

FIG.3

EP 1 314 973 A1

FIG.1

1

2

A

C

3   9

11

7   B   D   10

4

5

2

## Description

L'invention à trait à la détermination de l'indice de réfraction, notamment l'indice de réfraction d'un pétrole en fond de puits. Elle propose une méthode et un réfractomètre pour effectuer une mesure absolue de l'indice de réfraction.

La demande de brevet d'invention FR 01 06866 propose une méthode de mesure de l'indice de réfraction d'un milieu. Cette invention est basée sur un principe de mesure exploitant le phénomène de réflexion d'un rayon lumineux sur un dioptre. La présente invention propose un autre réfractomètre et une autre méthodologie mettant en oeuvre le même principe de mesure.

De manière générale, l'invention propose un réfractomètre comportant :

- une source lumineuse émettant un rayon lumineux incident en direction d'un dioptre composé d'un premier milieu d'indice de réfraction inconnu et d'un deuxième milieu d'indice de réfraction connu,
- un premier capteur mesurant l'intensité d'un rayon lumineux réfléchi sur le dioptre, et
- un premier tronçon de fibre optique dans lequel se propagent le rayon lumineux incident et le rayon lumineux réfléchi.

L'extrémité du premier tronçon de fibre optique du réfractomètre selon l'invention peut être munie d'un élément en verre.

Un coupleur en T peut transférer le rayon lumineux incident de la source lumineuse vers le premier tronçon de fibre optique et de transférer le rayon lumineux réfléchi du premier tronçon de fibre optique vers le premier capteur. Un deuxième tronçon de fibre optique peut être disposé entre la source lumineuse et le coupleur en T, le rayon incident se propageant dans le deuxième tronçon de fibre optique. Un troisième tronçon de fibre optique peut être disposé entre le coupleur en T et le premier capteur, le rayon lumineux réfléchi se propageant dans le troisième tronçon de fibre optique.

Une lentille peut concentrer le rayon lumineux incident avant d'entrer dans le deuxième tronçon de fibre optique.

Une lame peut être disposée entre la source lumineuse et le premier tronçon de fibre optique, la lame permettant de diviser un rayon lumineux en deux rayons lumineux. Un rayon lumineux émis par la source peut être divisé par la lame pour former le rayon lumineux incident et un rayon lumineux de référence, l'intensité du rayon lumineux de référence étant mesurée par un capteur.

Le réfractomètre selon l'invention peut être utilisé pour déterminer l'indice de réfraction d'un effluent pétrolier situé au fond d'un puits de production pétrolière en disposant les différents éléments composant le réfractomètre de la manière suivante :

- le premier milieu est l'effluent pétrolier situé au fond du puits,
- la source lumineuse et le premier capteur sont situés en surface du puits,
- le premier tronçon de fibre optique s'étend depuis le fond du puits jusqu'à la surface du puits.

L'invention propose également une méthode de mesure de l'indice de réfraction d'un premier milieu. La méthode comporte les étapes suivantes :

- on dirige un rayon lumineux incident sur un dioptre composé du premier milieu et d'un deuxième milieu d'indice de réfraction connu pour produire un rayon lumineux réfléchi
- on dispose un premier tronçon de fibre optique dans lequel se propagent le rayon lumineux incident et le rayon lumineux réfléchi,
- on mesure l'intensité dudit rayon lumineux incident et l'intensité dudit rayon lumineux réfléchi,
- on détermine l'indice de réfraction du premier milieu en tenant compte au moins de l'indice de réfraction du deuxième milieu, de l'intensité du rayon lumineux incident et de l'intensité du rayon lumineux réfléchi.

En mettant en oeuvre la méthode selon l'invention, on peut déterminer l'indice de réfraction du premier milieu par une formule qui lie l'intensité du rayon lumineux incident à l'intensité du rayon lumineux réfléchi au niveau du dioptre en tenant compte de l'indice de réfraction du premier milieu et de l'indice de réfraction du deuxième milieu. Par exemple, on détermine l'indice de réfraction du premier milieu avec les formules de Fresnel.

On peut diviser un rayon lumineux source pour former un rayon lumineux de référence et ledit rayon lumineux incident.

Selon l'invention, on peut utiliser un premier milieu dont l'indice de réfraction est connu. Dans cette configuration on mesure l'intensité dudit rayon lumineux de référence et l'intensité du rayon lumineux réfléchi afin de déterminer le rapport de l'intensité dudit rayon lumineux de référence divisée par l'intensité dudit rayon lumineux incident en utilisant une formule qui lie l'intensité du rayon lumineux incident à l'intensité du rayon lumineux réfléchi au niveau dudit dioptre en tenant compte des indices de réfraction du premier milieu et du deuxième milieu.

On peut mesurer l'intensité du rayon lumineux de référence pour déterminer l'intensité du rayon lumineux incident.

Une fibre optique permettant de guider un rayon lumineux sans en altérer les caractéristiques, il est possible d'éloigner à volonté la source lumineuse et les capteurs par rapport au milieu étudié. Par exemple, il est possible de mesurer l'indice de réfraction d'un effluent situé en fond de puits en disposant la source lumineuse et les capteurs en surface. Ainsi, le réfractomètre et la méthode selon la présente invention présente notamment l'avantage de pouvoir mesurer l'indice de réfraction d'un fluide sous haute pression et à haute température. Le seul élément du réfractomètre en contact avec le fluide étudié est un tronçon de fibre optique, l'extrémité du tronçon pouvant être en verre. Par conséquent, les limites de fonctionnement du réfractomètre vis-à-vis de la température et de la pression du fluide étudié sont égales aux limites de résistance à la température et à la pression du tronçon de la fibre optique, éventuellement muni d'une extrémité en verre en contact avec le fluide étudié.

D'autres détails, particularités et avantages de l'invention seront mieux compris à la lecture des exemples de réalisations de l'invention décrits en référence aux figures annexées parmi lesquelles :

- la figure 1 représente le principe de fonctionnement d'un réfractomètre selon l'invention,
- la figure 2 schématise le phénomène de réfraction et de réflexion d'un rayon lumineux dirigé sur un dioptre,
- la figure 3 représente schématiquement un réfractomètre selon l'invention,
- la figure 4 représente une mise en oeuvre d'un réfractomètre selon l'invention.

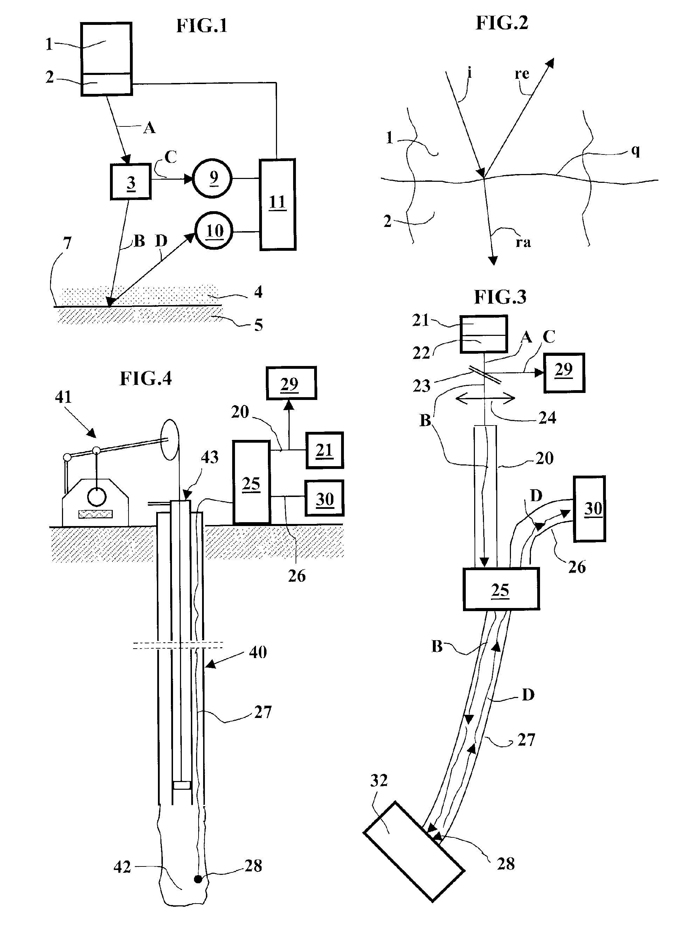

Sur la figure 1, le réfractomètre comporte une source lumineuse 1. La source lumineuse 1 émet un rayon lumineux A monochromatique, au moyen par exemple d'un filtre. La stabilité du rayon lumineux émis est de $10^{-4}$ par rapport à l'intensité émise. La source lumineuse peut consister en une diode laser, ou un laser, émettant un rayon lumineux d'intensité environ égale à 5 mW. La source lumineuse est associée à des moyens de codage 2. Les moyens de codage 2 permettent de coder le rayon lumineux A. Par exemple, les moyens de codage 2 permettent de faire varier de manière périodique à une fréquence f1, par exemple de manière sinusoïdale, l'intensité du rayon lumineux A autour d'une valeur moyenne. De plus, les moyens de codage 2 permettent de faire varier périodiquement à une fréquence f2, par exemple selon un signal en créneau, ladite intensité moyenne du rayon lumineux A. La fréquence f1 peut être égale à 5 000 Hz et la fréquence f2 peut être égale à 1 Hz.

Le rayon lumineux A est divisé par un élément optique 3 en deux rayons lumineux : le rayon lumineux B et le rayon lumineux C. La somme des intensités des rayons lumineux B et C est égale à l'intensité du rayon lumineux A. De plus, les intensités des rayons lumineux B et C varient selon des fréquences identiques à celles du rayon lumineux A.

Le rayon lumineux B se propage jusqu'au dioptre 7. Le dioptre 7 est constitué par l'interface entre le milieu 4, dont l'indice de réfraction est connu, et le milieu 5 dont on désire mesurer l'indice de réfraction. Sur la figure 1, le milieu 4 est représenté par la surface couverte de points, le milieu 5 est représenté par la surface hachurée. Le dioptre 7 peut être plan. Le rayon lumineux D représente la partie du rayon lumineux B qui est réfléchie sur le dioptre 7.

Des photo détecteurs 9 et 10 sont respectivement disposés sur les trajets des rayons lumineux C et D. Le photo détecteur 9 mesure l'intensité du rayon lumineux C, le photo détecteur 10 mesure l'intensité du rayon lumineux D.

Des moyens de traitement du signal 11 sont reliés aux moyens de codage 2 et aux photo détecteurs 9 et 10. Ils permettent de décoder les signaux captés par les photo détecteurs 9 et 10 compte tenu du codage effectué par les moyens 2, puis de comparer et d'analyser les intensités mesurées par les photo détecteurs 9 et 10. Les photos détecteurs 9 et 10 mesurent, d'une part, les intensités des rayons lumineux B et C issus du rayon lumineux A et, d'autre part, des intensités parasites n'ayant aucun rapport avec le rayon lumineux A. Grâce au moyen de codage 2, les rayons lumineux B et C varient de manière périodique selon les fréquences f1 et f2. Ces informations sont transmises aux moyens de traitement du signal 11. Ainsi, en recherchant des intensités lumineuses variant de manière périodique selon les fréquences f1 et f2, les moyens de traitement du signal 11 peuvent détecter et isoler les intensités des rayons lumineux C et D parmi les intensités lumineuses mesurées par les photo détecteurs 9 et 10. Puis, les moyens de traitement du signal 11 peuvent comparer les intensités des rayons lumineux C et D.

Le principe de mesure selon la présente invention propose d'utiliser le phénomène de réflexion d'un rayon lumineux pour déterminer l'indice de réfraction d'un milieu. En référence à la figure 2, les formules de Fresnel lient l'intensité Ii du rayon incident i à l'intensité Ire du rayon réfléchi re au niveau d'un dioptre q en fonction des indices de réfraction n1 et n2 des deux milieux 1 et 2 composant le dioptre q. Lorsque l'angle du rayon incident i sur le dioptre q est égal à 90°, les formules de Fresnel s'écrivent sous la forme d'une expression unique :

$$\frac{I_i}{I_r} = \frac{\left[\left(\dfrac{n_2}{n_1}\right) - 1\right]^2}{\left[\left(\dfrac{n_2}{n_1}\right) + 1\right]^2}$$

Sans sortir du cadre de l'invention, il est possible d'utiliser toute formule, équivalente aux formules de Fresnel, décrivant le phénomène de réflexion sur un dioptre du point de vue des intensités des rayons incident et réfléchi en tenant compte des indices de réfraction des deux milieux composant le dioptre.

Selon l'invention, en mesurant l'intensité IC du rayon C et en connaissant la répartition de l'intensité IA du rayon A entre les rayons B et C par l'élément optique 3, on détermine l'intensité IB du rayon B. La répartition de l'intensité IA du rayon A entre les rayons B et C peut être exprimée par la valeur du rapport de l'intensité IC du rayon C divisée par l'intensité IB du rayon B, c'est à dire le rapport $\frac{IC}{IB}$. En mesurant l'intensité IC du rayon C pour connaître l'intensité IB du rayon B, on obtient une mesure plus précise car la valeur de l'intensité IC est comparable à l'intensité ID.

En ayant déterminé l'intensité IB du rayon lumineux B, en mesurant l'intensité ID du rayon lumineux D et en connaissant l'indice de réfraction n4 du milieu 4 on détermine, à l'aide des formules de Fresnel, l'indice de réfraction n5 du milieu étudié 5.

Pour déterminer précisément, lors du passage du rayon A dans l'élément optique 3, la valeur du rapport de l'intensité IC du rayon lumineux C divisée par l'intensité IB du rayon lumineux B, c'est à dire le rapport $\frac{IC}{IB}$, on dispose un milieu 5 d'indice de réfraction n5 connu dans le réfractomètre selon l'invention. En utilisant les formules de Fresnel, en connaissant les indices de réfraction n4 et n5 des milieux 4 et 5, et en mesurant l'intensité ID du rayon lumineux ID, on détermine l'intensité IB du rayon lumineux B. Comme l'intensité IC du rayon lumineux C est mesurée, on connaît avec précision le rapport de l'intensité IC divisée par l'intensité IB, ce rapport $\frac{IC}{IB}$ étant utilisé pour la mise en oeuvre du réfractomètre selon l'invention afin de déterminer l'indice de réfraction d'un milieu 5. Ce rapport est connu sous le terme de « constante de l'appareil » de mesure.

La figure 3 représente un mode de réalisation du réfractomètre selon l'invention dans lequel les rayons lumineux sont guidés par des fibres optiques.

La source lumineuse 21 émet un rayon lumineux principal A. Des moyens de codage 22 peuvent coder le rayon lumineux principal A.

Le rayon A est dirigé vers une lame 23. Au niveau de la lame, le rayon A se divise en deux rayons lumineux: le rayon lumineux C et le rayon lumineux B. Le rayon lumineux B constitue la partie du rayon lumineux principal A qui traverse la lame 23. Le rayon lumineux C constitue la partie du rayon lumineux principal A qui est réfléchie par la lame 23. L'intensité du rayon lumineux C est mesurée par le photo détecteur 29. Le rayon lumineux B est concentré au moyen de la lentille 24 avant d'être introduit dans un premier tronçon de fibre optique 20. Le rayon B se propage dans le tronçon de fibre optique 20 jusqu'au coupleur en T référencé 25. Le coupleur en T 25 est connecté à trois tronçons de fibre optique : la fibre optique 20, la fibre optique 26 et la fibre optique 27. Le coupleur en T 25 permet de transférer le rayon lumineux B de la fibre 20 vers la fibre 27 et de transférer le rayon lumineux D de la fibre 27 vers la fibre 26. Les rayons B et D se propagent respectivement dans les fibres 20 et 27 en direction du coupleur en T 25.

Le rayon lumineux B se propage dans le tronçon de fibre optique 27 depuis le coupleur en T 25 jusqu'à l'extrémité 28 du tronçon 27. L'extrémité 28 peut être munie d'un élément en verre 32 permettant d'assurer la tenue en pression, en température et à la corrosion du tronçon de fibre optique 27. L'extrémité 28 munie de l'élément 32 est plongée dans le milieu à étudier. A l'extrémité 28, le rayon lumineux B est réfléchi par le dioptre composé de l'extrémité 28 du tronçon de fibre optique 27 et du milieu étudié. Si l'extrémité 28 est munie de l'élément en verre 32, le rayon lumineux B est réfléchi par le dioptre composé de l'élément en verre 32 et du milieu étudié. Le rayon réfléchi D se propage dans le tronçon de fibre optique 27 depuis l'extrémité 28 jusqu'au coupleur en T 25. Le rayon D est transféré du tronçon de fibre optique 27 vers le tronçon de fibre optique 26 au moyen du coupleur en T 25. Dans le tronçon 26, le rayon D se propage depuis le coupleur en T 25 jusqu'au photo détecteur 30. Le photo détecteur 30 permet de mesure l'intensité lumineuse du rayon D lorsqu'il sort du tronçon de fibre optique 26.

Le réfractomètre selon l'invention permet de mesure l'indice de réfraction d'un fluide difficile d'accès. Par exemple, le réfractomètre peut mesurer l'indice de réfraction d'un effluent pétrolier en fond de puits. La figure 4 représente un puits de pétrole 40. Le dispositif de pompage 41 permet de pomper le pétrole depuis le fond 42 du puits jusqu'à la tête de puits 43 située en surface. Un réfractomètre selon l'invention (les numéros de références de la figure 4, qui sont identiques à ceux de la figure 3 désignent des éléments identiques) permet de mesurer l'indice de réfraction du pétrole situé au fond 42 du puits 40. La source lumineuse 21, les tronçons de fibre optique 20 et 26, le coupleur en T 25 et les photo détecteurs 29 et 30 sont situés en surface, de préférence à proximité de la tête de puits 43. L'extrémité 28 du tronçon de fibre optique 27, située au fond 42 du puits, est plongée dans l'effluent (l'extrémité 28 pouvant être protégée par un élément en verre 32). La fibre optique 27 permet d'établir ainsi une liaison entre l'extrémité 28, située au fond 42 du puits 40, et le coupleur en T 25 situé en surface.

**Revendications**

1. Réfractomètre comportant :

   - une source lumineuse (21) émettant un rayon lumineux incident en direction d'un dioptre composé d'un premier milieu d'indice de réfraction inconnu et d'un deuxième milieu d'indice de réfraction connu,
   - au moins un premier capteur (30) mesurant l'intensité du rayon lumineux incident et l'intensité d'un rayon lumineux réfléchi provenant de la réflexion dudit rayon lumineux incident sur ledit dioptre, et

- un premier tronçon de fibre optique (27) dans lequel se propagent le rayon lumineux incident et le rayon lumineux réfléchi, le dioptre étant disposé à une extrémité du premier tronçon de fibre optique (27).

2. Réfractomètre selon la revendication 1 dans lequel l'extrémité (28) du premier tronçon de fibre optique est munie d'un élément en verre (32).

3. Réfractomètre selon l'une des revendications précédentes comportant un coupleur en T (25) permettant de transférer le rayon lumineux incident de la source lumineuse (21) vers le premier tronçon de fibre optique (27) et de transférer le rayon lumineux réfléchi du premier tronçon de fibre optique (27) vers le premier capteur (30).

4. Réfractomètre selon la revendication 3 comportant un deuxième tronçon de fibre optique (20) disposé entre la source lumineuse (21) et le coupleur en T (25), le rayon incident se propageant dans le deuxième tronçon de fibre optique (20).

5. Réfractomètre selon l'une des revendications 3 et 4 comportant un troisième tronçon de fibre optique (26) disposé entre le coupleur en T (25) et le premier capteur (30), le rayon lumineux réfléchi se propageant dans le troisième tronçon de fibre optique (26).

6. Réfractomètre selon l'une des revendications 4 et 5 dans lequel une lentille (24) permet de concentrer le rayon lumineux incident avant d'entrer dans le deuxième tronçon de fibre optique (20).

7. Réfractomètre selon l'une des revendications précédentes comportant une lame (23) disposée entre la source lumineuse (21) et le premier tronçon de fibre optique (27), la lame (23) permettant de diviser un rayon lumineux en deux rayons lumineux.

8. Réfractomètre selon la revendication 7 dans lequel un rayon lumineux émis par la source est divisé par la lame (23) pour former le rayon lumineux incident et un rayon lumineux de référence, l'intensité du rayon lumineux de référence étant mesurée par un capteur (29).

9. Réfractomètre selon l'une des revendications 1 à 8 pour déterminer l'indice de réfraction d'un effluent pétrolier situé au fond (42) d'un puits de production pétrolière (40), dans lequel :

- le premier milieu est l'effluent pétrolier situé au fond du puits,

- la source lumineuse (21) et le premier capteur (30) sont situés en surface du puits,

- le premier tronçon de fibre optique (27) s'étend depuis le fond du puits jusqu'à la surface du puits.

10. Méthode de mesure de l'indice de réfraction d'un premier milieu, comportant les étapes suivantes :

- on dirige un rayon lumineux incident sur un dioptre composé du premier milieu et d'un deuxième milieu d'indice de réfraction connu pour produire un rayon lumineux réfléchi,

- on dispose un premier tronçon de fibre optique (27) dans lequel se propagent le rayon lumineux incident et le rayon lumineux réfléchi,

- on mesure l'intensité dudit rayon lumineux incident et l'intensité dudit rayon lumineux réfléchi,

- on détermine l'indice de réfraction du premier milieu en tenant compte au moins de l'indice de réfraction du deuxième milieu, de l'intensité du rayon lumineux incident et de l'intensité du rayon lumineux réfléchi.

11. Méthode selon la revendication 10, dans laquelle on détermine l'indice de réfraction du premier milieu par une formule qui lie l'intensité du rayon lumineux incident à l'intensité du rayon lumineux réfléchi au niveau du dioptre en tenant compte de l'indice de réfraction du premier milieu et de l'indice de réfraction du deuxième milieu.

12. Méthode selon l'une des revendications 10 et 11, dans laquelle on détermine l'indice de réfraction du premier milieu avec les formules de Fresnel.

13. Méthode selon l'une des revendications 10 à 12, dans laquelle on divise un rayon lumineux source pour former un rayon lumineux de référence et ledit rayon lumineux incident.

14. Méthode selon la revendication 13, dans laquelle on utilise ledit premier milieu dont l'indice de réfraction est connu, on mesure l'intensité dudit rayon lumineux de référence et l'intensité du rayon lumineux réfléchi et on détermine le rapport de l'intensité dudit rayon lumineux de référence divisée par l'intensité dudit rayon lumineux incident en utilisant une formule qui lie l'intensité du rayon lumineux incident à l'intensité du rayon lumineux réfléchi au niveau dudit dioptre en tenant compte des indices de réfraction du premier milieu et du deuxième milieu.

15. Méthode de mesure selon la revendication 13, dans laquelle on mesure l'intensité du rayon lumineux de référence pour déterminer l'intensité du rayon lumineux incident.

**FIG.1**

**FIG.2**

**FIG.4**

**FIG.3**

**Office européen des brevets**

**RAPPORT DE RECHERCHE EUROPEENNE**

Numéro de la demande

EP 02 29 2590

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | FR 2 725 788 A (SCHNEIDER ELECTRIC SA) 19 avril 1996 (1996-04-19) | 1,3-15 | G01N21/43 |
| Y | * page 4, ligne 1 - ligne 17 * <br> * page 6, ligne 25 - ligne 36; figure 2 * <br> --- | 2 | |
| Y | EP 0 809 098 A (SCHLUMBERGER TECHNOLOGY BV ;SCHLUMBERGER LIMITED A NETHERL (US); S) 26 novembre 1997 (1997-11-26) <br> * colonne 6, ligne 32 - ligne 36 * <br> * colonne 6, ligne 56 - colonne 7, ligne 1 * <br> * colonne 11, ligne 31 - ligne 36 * <br> * figures 1,5 * <br> --- | 2 | |
| A | GB 2 206 201 A (UNIV SINGAPORE) 29 décembre 1988 (1988-12-29) * le document en entier * <br> ----- | 1-15 | |

**DOMAINES TECHNIQUES RECHERCHES (Int.Cl.7)**

G01N

Le présent rapport a été établi pour toutes les revendications

| Lieu de la recherche | Date d'achèvement de la recherche | Examinateur |
|---|---|---|
| BERLIN | 4 mars 2003 | Navas Montero, E |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 02 29 2590

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-03-2003

| Document brevet cité au rapport de recherche | | Date de publication | Membre(s) de la famille de brevet(s) | | Date de publication |
|---|---|---|---|---|---|
| FR 2725788 | A | 19-04-1996 | FR | 2725788 A1 | 19-04-1996 |
| EP 0809098 | A | 26-11-1997 | FR | 2749080 A1 | 28-11-1997 |
| | | | CA | 2205746 A1 | 22-11-1997 |
| | | | EP | 0809098 A1 | 26-11-1997 |
| | | | NO | 972323 A | 24-11-1997 |
| | | | US | 5956132 A | 21-09-1999 |
| GB 2206201 | A | 29-12-1988 | SG | 109091 G | 16-04-1992 |

EPO FORM P0460

Pour tout renseignement concernant cette annexe : voir Journal Officiel de l'Office européen des brevets, No.12/82